# EUROPÄISCHE PATENTANMELDUNG

(11) **EP 2 677 209 A1**
(43) Veröffentlichungstag der Anmeldung: **25.12.2013**
(21) Anmeldenummer: 13002853.3
(22) Anmeldetag: 03.06.2013
(51) Int. Cl.: F16H 57/08, F03D 11/02

(54) **Planetenträger eines Planetengetriebes**

(30) Priorität: 18.06.2012 DE 102012012097
(71) Anmelder: ROBERT BOSCH GMBH, 70442 Stuttgart (DE)
(72) Erfinder: Lehmann, Marco, 42275 Wuppertal (DE); Kleine-Brockhoff, Ralf, 46284 Dorsten (DE); Schweihoff, Claudia, 44795 Bochum (DE); Daners, Dominikus, 45701 Herten (DE); Roszkowski, Miroslaw, 44892 Bochum (DE)
(74) Vertreter: Wiesmann, Stephan

(57) **Zusammenfassung**

Planetenträger (10) eines Planetengetriebes (4), aufweisend zwei mittels Planetenstege (12) miteinander verbundene Planetenstegwangen (11a, 11b), wobei die in Umfangsrichtung einander gegenüberliegenden Seiten der Planetenstegwangen (11a, 11b) zusammen mit äußeren Mantelflächen (31) der Planetenstege (12) Mantelöffnungen (30) begrenzen, wobei in zumindest einer Planetenstegwange (11a, 11b) mindestens eine Planetenbolzenöffnung (14) zur Aufnahme von einem Bolzen zur Lagerung von einem Planetenrad vorgesehen ist, und wobei zumindest eine Planetenstegwange (11a, 11b) im Bereich der Anbindung eines Planetensteges (12) ein die axiale Länge des Planetensteges (12) reduzierenden Übergang aufweist. Erfindungsgemäß wird ein Planetenträger (10) bereitgestellt, der gewichts- und festigkeitsoptimiert ist. Erreicht wird dies dadurch, dass der Übergang eine abgerundete Kontur in Form einer Kugelkalotte aufweist.

## Beschreibung

Die Erfindung betrifft einen Planetenträger eines Planetengetriebes, aufweisend zwei mittels Planetenstege miteinander verbundene Planetenstegwangen, wobei die in Umfangsrichtung einander gegenüberliegenden Seiten der Planetenstegwangen zusammen mit äußeren Mantelflächen der Planetenstege Mantelöffnungen begrenzen, wobei in zumindest einer Planetenstegwange mindestens eine Planetenbolzenöffnung zur Aufnahme von einem Bolzen zur Lagerung eines Planetenrads vorgesehen ist, und wobei zumindest eine Planetenstegwange im Bereich der Anbindung eines Planetensteges ein die axiale Länge des Planetensteges reduzierenden Übergang aufweist.

Ein derartiger Planetenträger ist aus der EP 1 186 804 B1 bekannt. Dieser als einteiliges Gussteil ausgebildete Planetenträger weist zwei Planetenstegwangen auf, die über mittig eingeschnürte Planentenstege miteinander verbunden sind. Die Planetenstegwangen weisen geradlinige seitliche Abschrägungen auf, die mit den Planetenstegen zusammenwirken. Darüber hinaus bilden die Planetenstege zur Mitte hin in radialer und tangentialer Richtung des Planetenträgers verjüngte Trapezprofile.

Der Erfindung liegt die Aufgabe zu Grunde, einen gewichts- und festigkeitsoptimierten Planetenträger bereitzustellen.

Diese Aufgabe wird dadurch gelöst, dass der Übergang eine abgerundete Kontur aufweist. Eine abgerundete Kontur kann gegenüber einer geradlinigen Abschrägung besser an Kraftflusslinien in dem Planetenträger angepasst sein und somit deutlich besser festigkeitsoptimiert ausgestaltet sein. Dadurch ist es weiterhin möglich, die Wandstärke des Planetenträgers insbesondere im Bereich des Übergangs zwischen der der jeweiligen Planetenstegwange und dem Planetensteg zu verringern, wodurch die angestrebte Gewichtsoptimierung dargestellt wird.

In Weiterbildung der Erfindung weist der Planetensteg eine geschlossene oder offene Geometrie, die bevorzugt eine Dreiecksgeometrie ist, auf und der Übergang eine Konkavkontur auf. Die geschlossene oder offene Dreiecksgeometrie trägt zu einer Festigkeitsoptimierung insbesondere hinsichtlich einer denkbaren Verdrehung der beiden Planetenstegwangen bei, wobei die offene Dreiecksgeometrie deutliche Gewichtsvorteile gegenüber der geschlossenen Dreiecksgeometrie aufweist. Die mit der Dreiecksgeometrie ausgebildeten Planetenstege werden bei einer hohlen Ausgestaltung auch Herzchen genannt. Die Konkavkontur des Übergangs ist einerseits festigkeitsoptimiert, andererseits günstig in einer entsprechenden Gießform bei einem aus einem Metallguss gefertigten Planetenträger umzusetzen. Dabei kann zwischen dem Planetensteg und der Planetenstegwange eine zurückgenommene, verrundete Geometrie ausgebildet sein, die in einer Gießform problemlos umsetzbar ist.

In Weiterbildung der Erfindung ist die Konkavkontur kugelkalottenförmig ausgebildet. Dies ist die bevorzugte Ausführungsform, die zu dem gießtechnisch problemlos umsetzbar ist. Darüberhinaus ist es so, dass bevorzugt alle Übergänge zwischen den Planetenstegwangen und den Planetenstegen erfindungsgemäß ausgebildet sind. Dennoch ist es im Rahmen der Erfindung auch vorgesehen, nur bestimmte einzeln ausgewählte Übergänge erfindungsgemäß auszugestalten, während die restlichen Übergänge konventionell ausgestaltet sind.

In Weiterbildung der Erfindung weist der Planetentsteg einen in axialer Richtung des Planetenträgers angeordneten Hohlraum auf. Dieser Hohlraum kann auf einer Planetenstegwange zumindest teilweise von einer Gusswand verschlossen sein. Diese Ausgestaltung optimiert bei einem geringen Materialeinsatz die Festigkeit, indem beispielsweise die angetriebene Planetenstegwange mit einer den Hohlraum zumindest teilweise verschließenden Gusswand versehen ist.

In weiterer Ausgestaltung der Erfindung weist die Planetenstegwange an dem Außenumfang einen Überstand auf. Dieser Überstand ist als Wulst ausgebildet und kann axial oder radial angeordnet sein. Dieser Überstand beziehungsweise Wulst kann im Bereich der Anbindung des Planetenstegs an die Planetenstegwange unterbrochen sein. Der Überstand beziehungsweise der Wulst kann nach innen oder außen (von der Planetenstegwange axial gesehen) angeordnet sein. Weiterhin kann der Überstand beziehungsweise der Wulst nur über den Planetenbolzenöffnungen angeordnet sein. Schließlich kann der Überstand beziehungsweise der Wulst sich in die zurückgenommene Fläche des Planetensteges verlaufen oder sich auf dieser Fläche sogar kreuzen.

In Weiterbildung der Erfindung weist die Planetenstegwange zwischen dem Planetensteg und der Planetenbolzenöffnung eine Verdickung der Wandung in Form eines Batzens auf. Diese Verdickung kann gezielt zu einer Festigkeitsoptimierung ausgebildet sein dazu kann die Verdickung in weiterer Ausgestaltung dreiecksförmig in radialer Richtung nach außen dicker werdend ausgebildet sein. Weiterhin kann die Verdickung in den zuvor beschriebenen Überstand beziehungsweise Wulst einmünden.

In weiterer Ausgestaltung sind die Kugelkalotte, der Überstand beziehungsweise der Wulst und die Batzen zueinander verrundet und homogenisiert. Auch diese Ausgestaltung trägt zu einer Festigkeitsoptimierung bei. Weiterhin mündet die Verdickung in den Überstand beziehungsweise den Wulst aus.

In Weiterbildung der Erfindung ist an einer Planetenbolzenöffnung eine axiale Brillenkontur angeordnet, die nach innen in eine eine Zentralbohrung umgebende umlaufende Rippe und nach außen in den äußeren Wulst übergeht. Diese Brillenkontur ist durch verdickte Übergänge geschaffen, die wiederum insgesamt eine Festigkeitsoptimierung darstellen.

Insbesondere der Überstand beziehungsweise der Wulst kann radial wellig ausgeführt sein. Die Planetenbolzenöffnung kann radial nach außen verstärkend beziehungsweise verdickend ausgeführt sein. Zwischen der Planetenbolzenöffnung und der Planetenstegwange kann diese radial zurückgenommen sein und dann wieder zum Planetensteg hin radial nach außen auskragend ausgeführt sein.

In Weiterbildung der Erfindung ist eine Einkerbung auf der Innenseite der Planetenstegwange im Übergang zu einer Zentralbohrung für eine ein Sonnenrad tragenden Sonnenradwelle vorgesehen. Diese Einkerbung bewirkt eine Gießoptimierung und eine Festigkeitsoptimierung.

In weiterer Ausgestaltung der Erfindung weist die Mantelfläche des Steges eine radiale Ausbeulung auf. Diese nach außen ragende radiale Ausbeulung kann gusstechnisch einfach umgesetzt werden und trägt ebenfalls zu einer Festigkeitsoptimierung bei.

In Weiterbildung der Erfindung ist in den Übergang beziehungsweise die Anbindung des Planetensteges an eine Planetenstegwange eine Öffnung in Form eines Durchbruchs eingelassen. Dieser Durchbruch führt bei einem neutralen Einfluss auf die Festigkeit zu einer Gewichtsoptimierung und ermöglicht einen (axialen) Eintritt von Getriebeöl in den Hohlraum, welches beim Umlauf des Planetenträgers der Verzahnung der verschiedenen Zahnrädern und den Lagern zugeführt werden kann.

In weiterer Ausgestaltung der Erfindung weist der Planetensteg zumindest eine in einer Umfangswand der Dreiecksgeometrie eingelassene Durchbrechung auf. Diese Durchbrechung ermöglicht die Verwendung eines einzigen Gusskerns zur Darstellung des Planetenradraums und des Hohlraums bei einem gegossenen Planetenträger, indem diese Räume durch die Durchbrechung miteinander verbunden sind.

Bevorzugt ist der Planetenträger Teil eines Strömungskraftanlagengetriebes, insbesondere eines Meeresströmungskraftanlagengetriebes oder eines Windkraftanlagengetriebes.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind:

Es zeigen:
- Figur 1: eine schematische Seitenansicht einer Windkraftanlage mit einem einen erfindungsgemäß ausgestalteten Planetenträger aufweisenden Generatorgetriebe,
- Figur 2: eine Stirnansicht eines erfindungsgemäß ausgebildeten Planetenträgers,
- Figur 3: eine Seitenansicht eines Planetenträgers gemäß Figur 2,
- Figur 4: einen Querschnitt durch den erfindungsgemäßen Planetenträger,
- Figur 5: einen Längsschnitt durch den Planetenträger,
- Figur 6: eine perspektivische Ansicht eines erfindungsgemäßen Planetenträgers,
- Figur 7: eine Stirnansicht eines Planetenträgers mit einer radialen Außenausbuchtung einer Planetenstegwange im Bereich einer Anbindung an einen Planetensteg,
- Figur 8: einen entsprechenden Längsschnitt durch den Planetenträger gemäß Figur 7,
- Figur 9: eine Stirnansicht eines Planetenträgers mit einer Verdickung einer Planetenstegwange zwischen einer Planetenbolzenöffnung und einem Planetensteg in Form eines Batzens,
- Figur 10: eine entsprechende Seitenansicht des Planetenträgers gemäß Figur 9,
- Figur 11: eine Stirnansicht eines Planetenträgers mit einer eine Planetenbolzenöffnung umgebenden Brillenkontur sowie einer axial durchbrochenen Kugelkalotte.

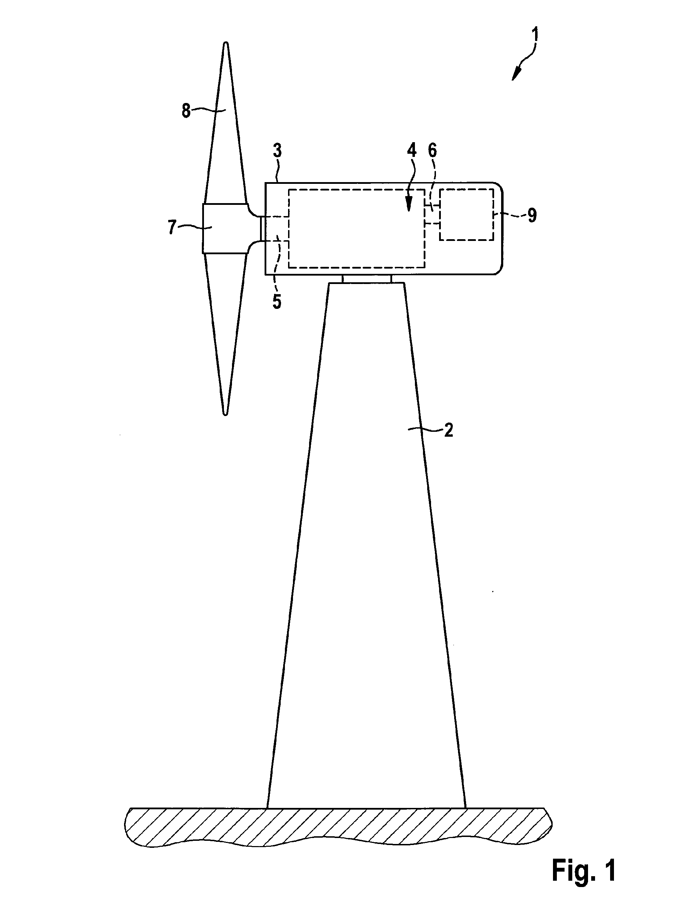

Figur 1 zeigt eine Seitenansicht einer Windkraftanlage 1 mit ihren wesentlichen Baugruppen. Die Windkraftanlage 1 weist einen Turm 2 auf, auf dem eine um eine Vertikalachse drehbar gelagerte Gondel 3 in Form eines Maschinengehäuses angeordnet ist. In der Gondel 3 ist ein Generatorgetriebe 4 drehfest befestigt, wobei das Generatorgetriebe 4 eine Antriebswelle 5 und eine Abtriebswelle 6 aufweist. Die Antriebswelle 5 des Generatorgetriebes 4 ist mit einer Nabe 7 eines mehrere Rotorblätter 8 aufweisenden Rotors verbunden. Die Abtriebswelle 6 ist mit einer anzutreibenden Antriebsvorrichtung in Form eines Generators 9 drehverbunden. Das Generatorgetriebe 4 ist so ausgelegt, dass es eine langsame Drehbewegung der Antriebswelle 5 in eine schnelle Drehbewegung der Abtriebswelle 6 umsetzt. Dazu weist das Generatorgetriebe 4 eine oder mehrere Planetenstufen auf, die über ein abschließendes Stirnradgetriebe oder aber auch direkt mit der Abtriebswelle 6 zusammenwirken. Zumindest eine der Planetenstufen weist einen erfindungsgemäß ausgebildeten Planetenträger auf, der in den nachfolgenden Figuren beschrieben wird. Mittels der Windkraftanlage 1 wird elektrische Energie erzeugt, indem der von dem Wind in Drehbewegung versetzte Rotor die auf die Antriebswelle 5 übertragene Drehbewegung in das Generatorgetriebe 4 einleitet. Das Generatorgetriebe 4 setzt die Drehbewegung in eine schnellere Drehbewegung um und schließlich wird über die Abtriebswelle 6 die schnelle Drehbewegung zur Erzeugung von Strom auf den Generator 9 übertragen.

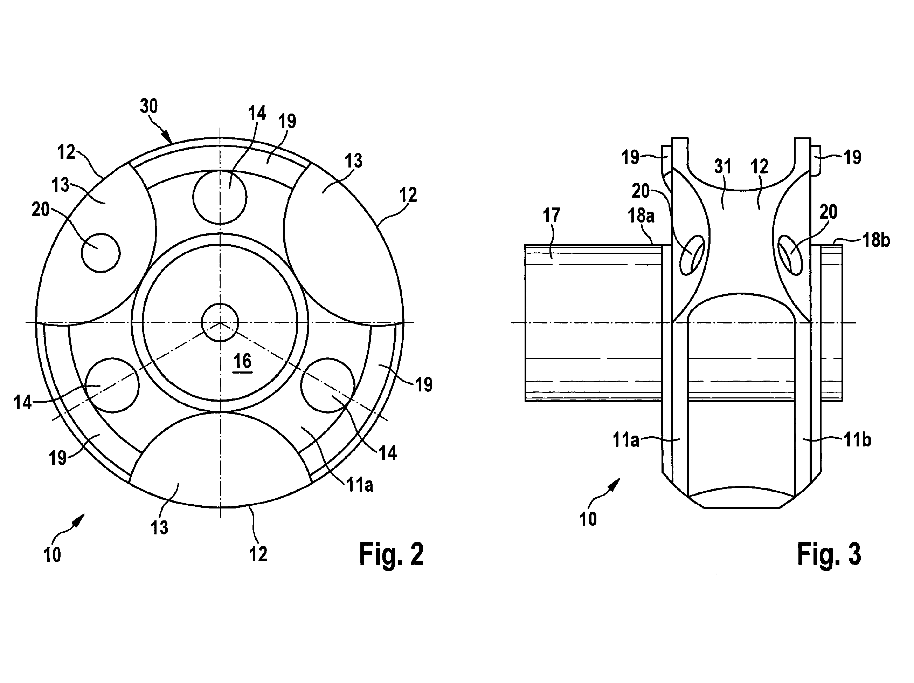

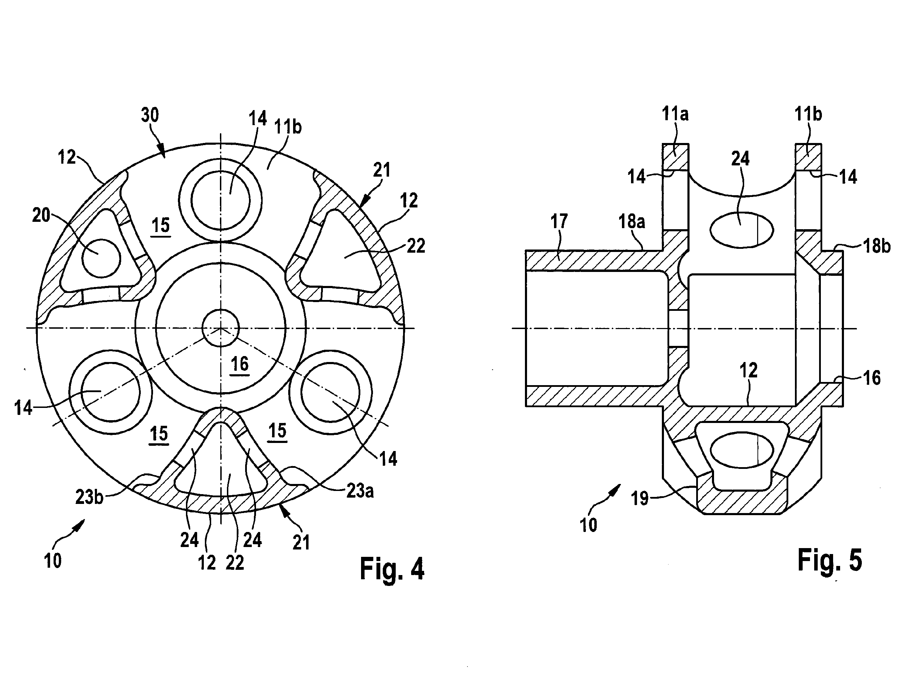

Figur 2 zeigt eine Stirnansicht eines erfindungsgemäß ausgebildeten Planetenträgers 10, der in dem Generatorgetriebe 4 verbaut ist. Der Planetenträger 10 weist ausweislich den Figuren 2 bis 6 zwei Planetenstegwangen 11a, 11 b auf, die über drei auf dem Umfang der Planetenstegwangen 11 a, 11 b verteilt angeordnete Planetenstege 12 (siehe auch Figur 4) miteinander verbunden sind. Im Bereich der Anbindung eines Planetensteges 12 an eine Planetenstegwange 11 a, 11 b ist die entsprechende Planetenstegwange 11a, 11 b mit einem die axiale Länge des Planetensteges 12 reduzierenden Übergang in Form einer Kugelkalotte 13 ausgebildet. Die kugelkalottenförmige Ausgestaltung bewirkt eine Gewichts- und Festigkeitsoptimierung des Planetenträgers 10. Im Bereich zwischen den drei auf dem Umfang der Planetenstegwangen 11 a, 11 b verteilt angeordneten Planetenstegen 12 mit den Kugelkalotten 13 sind drei Planetenbolzenöffnungen 14 in die Planetenstegwangen 11 a, 11 b eingearbeitet. In zwei zueinander ausgerichtete Planetenbolzenöffnungen 14 wird bei der Montage des Generatorgetriebes 4 ein Planetenrad haltendeder Bolzen eingesetzt. Eine der jeweils zueinander ausgerichteten Planetenbolzenöffnungen 14 kann als Sacklochöffnung ausgebildet sein und folglich die entsprechende Planetenstegwange 11 a, 11 b nicht vollständig durchdringen. Weiterhin ist es grundsätzlich auch möglich, nur in eine Planetenstegwange 11 a, 11 b eine Planetenbolzenöffnung 14 einzulassen, die alleine den Bolzen trägt. Jedes der drei Planetenräder ist im Bereich eines zwischen den Planetenstegwangen 11a, 11 b zwischen zwei benachbarten Planetenstegen 12 gebildeten Planetenradraum 15 angeordnet und wird durch eine Mantelöffnung 30 zwischen den benachbarten Planetenstegen 12 in den Planetenradraum 15 eingeführt. Der Planetenträger 10 weist eine Durchgangsöffnung 16 auf, in deren Bereich ein Sonnenrad angeordnet ist. Das Sonnenrad steht im montierten Zustand mit den Planetenrädern in einem Zahneingriff und wird von diesen zentriert.

Einseitig weist der Planetenträger 10 einen rohrförmigen Fortsatz 17 auf, der den Antrieb für den Planetenträger 10 bildet. Rechts und links außerhalb der Planetenstegwangen 11a, 11b sind Lagerbereiche 18a, 18b vorgesehen auf denen Wälzlager zur Lagerung des Planetenträger 10 in dem Generatorgetriebegehäuse angeordnet werden.

Ausweislich der Figuren 2 und 3 weisen die Planetenstegwangen 11a, 11b im Bereich zwischen zwei benachbarten Kugelkalotten 13 angrenzend an die drei Mantelöffnungen 30 Überstände in Form von der äußeren Kontur der Planetenstegwangen 11a, 11 b folgenden Wülsten 19 auf. Die Wülste 19 laufen bevorzugt in die Kugelkalotten 13 aus. Weiterhin sind die gegenüberliegenden linken, oberen Kugelkalotten 13 der Figur 2 mit einem Durchbruch 20 versehen, der eine weitere,Gewichtsoptimierung darstellt. Der Durchbruch 20 ist ebenfalls in den Figur 3 und 4 dargestellt.

Figur 4 zeigt einen Querschnitt durch den Planetenträger 10 gemäß Figur 2. In dieser Schnittdarstellung ist eine Dreiecksgeometrie 21 der Planetenstege 12 erkennbar, wobei darüberhinaus ersichtlich ist, dass die Planetenstege 12 hohl ausgebildet einen Hohlraum 22 aufweisen. In gegenüberliegende Umfangswandungen 23a, 23b der Planetenstege 12 sind Durchbrechungen 24 eingelassen, die den jeweiligen Hohlraum 22 mit benachbarten Planetenradräumen 15 verbinden. Die Durchbrechungen 24 ermöglichen es, einen einzigen Gusskern zu verwenden, der in eine Gießform eingesetzt die inneren Hohlräume des gegossenen Planetenträgers 10 bildet. Die Durchbrechungen 24 können eine beliebige Ausgestaltung aufweisen und auch Teile der Umfangswandungen 23a, 23b komplett wegschneiden. So ist es beispielsweise auch denkbar, die zu der Zentralbohrung 16 weisende innere Spitze der Dreiecksgeometrie 21 komplett wegzuschneiden. Weiterhin können die Durchbrechungen 24 auf gegenüberliegenden Umfangswandungen 23a, 23b unterschiedlich ausgebildet und asymmetrisch zueinander angeordnet sein. Weiterhin kann der Hohlraum 22 im Bereich einer Planetenstegwange 11 a, 11 b teilweise oder vollständig verschlossen sein. Analog zu den Darstellungen der Figuren 2 und 3 ist in die linke, obere Kugelkalotte 13 des Planetenstegs 12 im Bereich der Planetenstegwange 11 b ein Durchbruch 20 eingelassen.

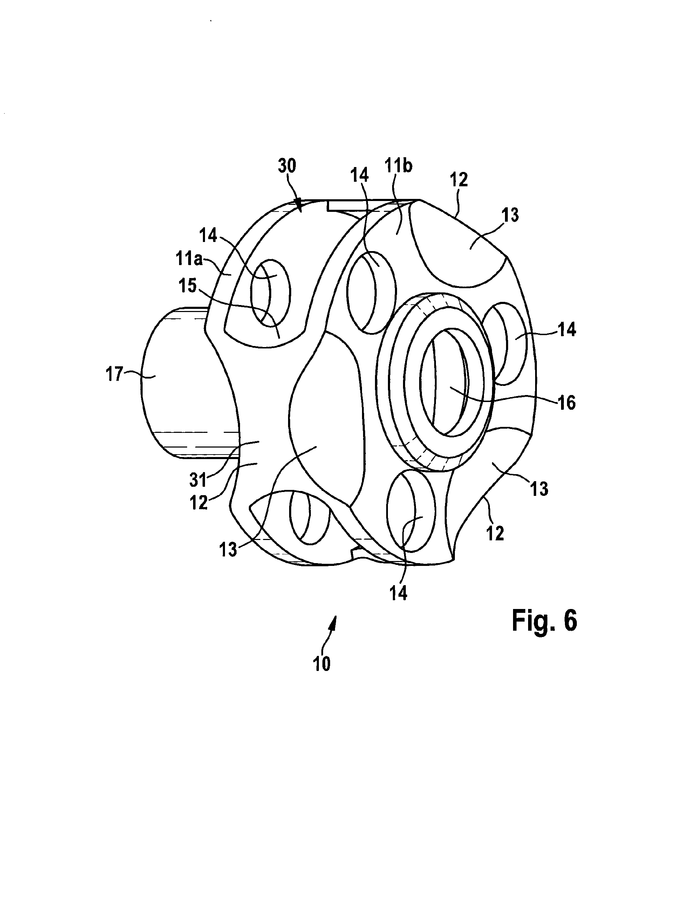

Figur 6 zeigt in einer perspektivischen Ansicht die Ausgestaltung des Planetenträgers 10, der in der Darstellung gemäß Figur 6 ohne eine Durchbrechung 24 in den Kugelkalotten 13 ausgebildet ist.

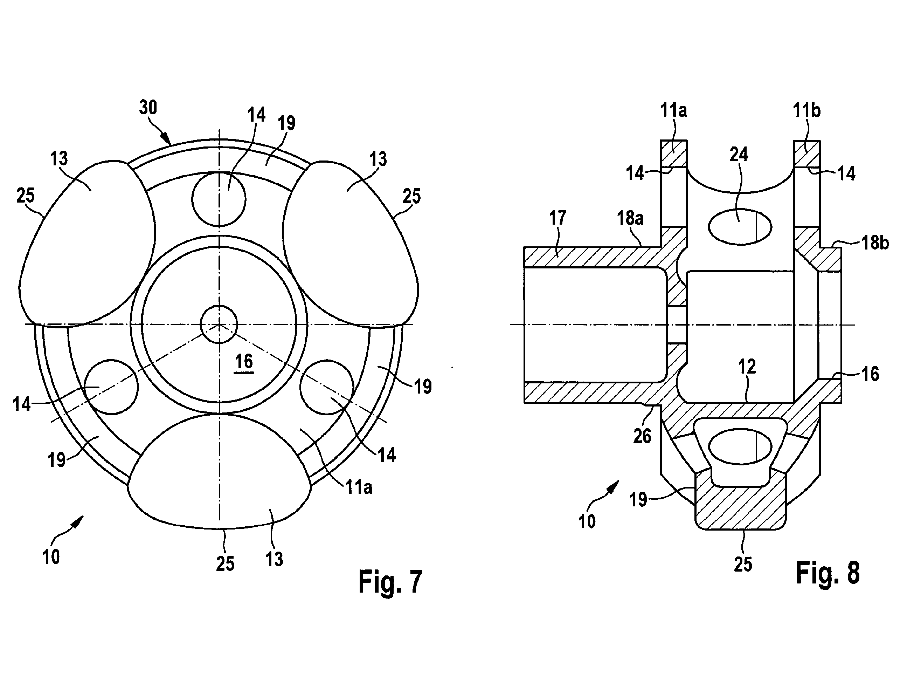

Figuren 7 und 8 zeigen analoge Ansichten zu den Figuren 2 und 5, wobei hier die Mantelflächen der Planetenstege 12 nach außen weisende Ausbeulungen 25 aufweisen. Weiterhin ist in der Figur 8 eine Einkerbung 26 auf der Innenseite des Planetenstegs 11 a im Übergang zu der Zentralbohrung 16, die eine Lageröffnung ein Sonnenrad darstellt, vorgesehen. Die umlaufende Einkerbung 26 optimiert den Planetenträger 10 insbesondere in gusstechnischer Hinsicht.

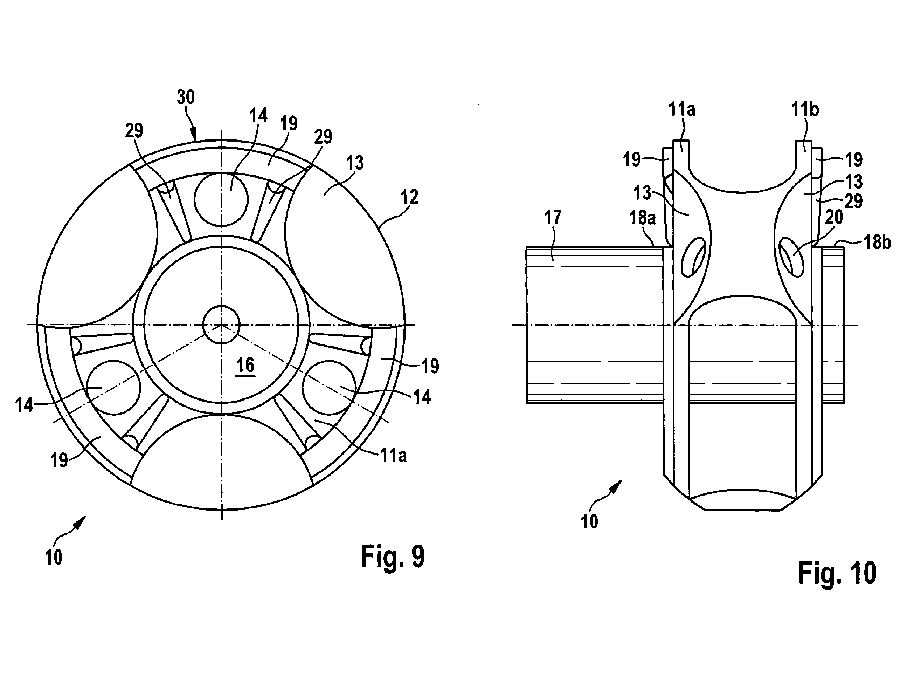

Die Figuren 9 und 10 zeigen im Unterschied beziehungsweise in Ergänzung zu den vorherigen Ausführungen die Anordnung von äußeren Batzen 29 an den Planetenstegwangen 11a, 11 b, die seitlich der Planetenbolzenöffnungen 14 angeordnet sind und in den umlaufenden Wulst 19 übergehen.

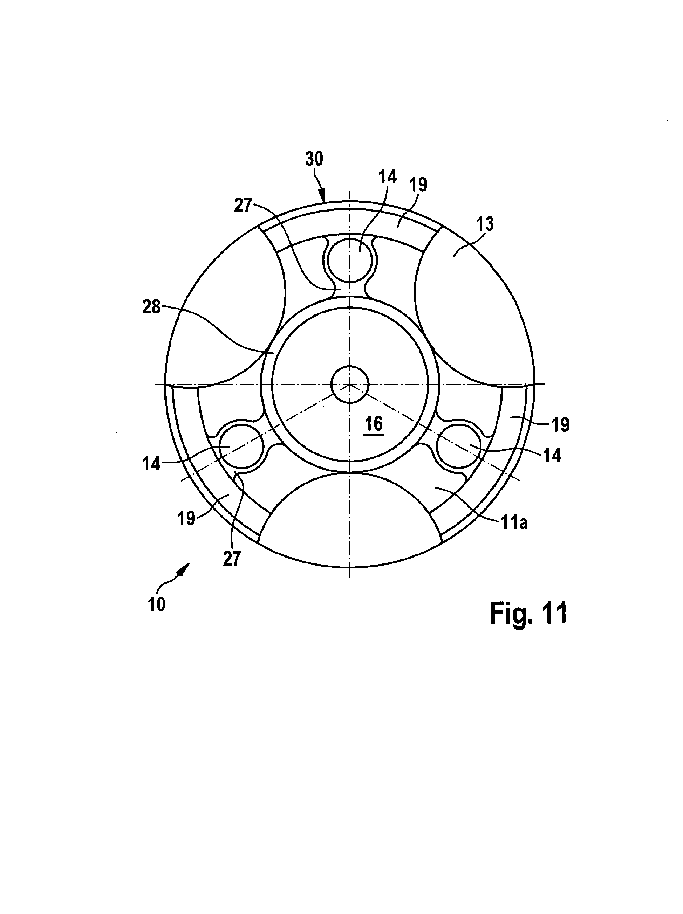

Figur 11 schließlich zeigt eine Einfassung der Planetenbolzenöffnungen 14 von einer Brillenkontur 27, die in den äußeren Wulst 19 und in eine die Zentralbohrung 16 umgebende Rippe 28 übergeht. Auch die Brillenkontur 27 trägt zu einer Versteifung und somit Festigkeitsoptimierung des Planetenträgers 10 bei.

Abschließend wird darauf hingewiesen, dass beliebige Kombinationen insbesondere der in den Figuren beschriebenen Einzelmerkmale im Rahmen der Erfindung umsetzbar sind.

### Bezugszeichenliste

- 1: Windkraftanlage
- 2: Turm
- 3: Gondel
- 4: Generatorgetriebe
- 5: Antriebswelle
- 6: Abtriebswelle
- 7: Nabe
- 8: Rotorblatt
- 9: Generator
- 10: Planetenträger
- 11a, 11 b: Planetenstegwange
- 12: Planetensteg
- 13: Kugelkalotte
- 14: Planetenbolzenöffnung
- 15: Planetenradraum
- 16: Durchgangsöffnung
- 17: Fortsatz
- 18a, 18b: Lagerbereich
- 19: Wulst
- 20: Durchbruch
- 21: Geometrie
- 22: Hohlraum
- 23a, 23b: Umfangswandung
- 24: Durchbrechung
- 25: Ausbeulung
- 26: Einkerbung
- 27: Brillenkontur
- 28: Rippe
- 29: Batzen
- 30: Mantelöffnung
- 31: Mantelfläche

## Patentansprüche

1. Planetenträger (10) eines Planetengetriebes (4), aufweisend zwei mittels Planetenstege (12) miteinander verbundene Planetenstegwangen (11a, 11 b), wobei die in Umfangsrichtung einander gegenüberliegenden Seiten der Planetenstegwangen (11 a, 11 b) zusammen mit äußeren Mantelfächen (31) der Planetenstege (12) Mantelöffnungen (30) begrenzen, wobei in zumindest einer Planetenstegwange (11 a, 11 b) mindestens eine Planetenbolzenöffnung (14) zur Aufnahme eines Bolzens zur Lagerung eines Planetenrads vorgesehen ist, und wobei zumindest eine Planetenstegwange (11a, 11 b) im Bereich der Anbindung eines Planetenstegs (12) einen die axiale Länge des Planetenstegs (12) reduzierenden Übergang aufweist,
**dadurch gekennzeichnet, dass** der Übergang eine abgerundete Kontur aufweist.

2. Planetenträger (10) nach Anspruch 1,
**dadurch gekennzeichnet, dass** der Planetensteg (12) eine geschlossene oder offene Geometrie (21) aufweist und dass der Übergang eine Konkavkontur aufweist.

3. Planetenträger (10) nach Anspruch 2,
**dadurch gekennzeichnet, dass** die Geometrie (21) eine Dreiecksgeometrie ist.

4. Planetenträger (10) nach Anspruch 2 oder 3,
**dadurch gekennzeichnet, dass** die Konkavkontur eine Kugelkalotte (13) ist.

5. Planetenträger (10) nach einem der vorherigen Ansprüche,
**dadurch gekennzeichnet, dass** der Planetensteg (12) einen in axialer Richtung des Planetenträgers (10) angeordneten Hohlraum (22) aufweist.

6. Planetenträger (10) nach einem der vorherigen Ansprüche,
**dadurch gekennzeichnet, dass** die Planetenstegwange (11 a, 11 b) an dem Außenumfang einen Überstand in Form eines Wulstes (19) aufweist.

7. Planetenträger (10) nach einem der vorherigen Ansprüche,
**dadurch gekennzeichnet, dass** die Planetenstegwange (11 a, 11 b) zwischen Planetensteg (12) und der Planetenbolzenöffnung (14) eine Verdickung der Wandung in Form eines Batzens (29) aufweist.

8. Planetenträger (10) nach Anspruch 7,
**dadurch gekennzeichnet, dass** die Verdickung dreiecksförmig in radialer Richtung nach außen dicker werdend ausgebildet ist.

9. Planetenträger (10) nach einem der Ansprüche 6 bis 8,
**dadurch gekennzeichnet, dass** die Verdickung in den Überstand ausmündet.

10. Planetenträger (10) nach einem der vorherigen Ansprüche,
**dadurch gekennzeichnet, dass** an einer Planetenbolzenöffnung (14) eine axiale Brillenkontur (27) angeordnet ist, die nach innen in eine eine Zentralbohrung (16) umgebende umlaufende Rippe (28) und nach außen in die äußere Wulst (19) übergeht.

11. Planetenträger (10) nach einem der vorherigen Ansprüche,
**dadurch gekennzeichnet, dass** eine Einkerbung (26) auf der Innenseite der Planetenstegwange (11a) im Übergang zu einer Durchgangsöffnung (16) vorgesehen ist.

12. Planetenträger (10) nach einem der vorherigen Ansprüche,
**dadurch gekennzeichnet, dass** die Mantelfläche (31) des Planetensteges (12) eine radiale äußere Ausbeulung (25) aufweist.

13. Planetenträger (10) nach einem der vorherigen Ansprüche,
**dadurch gekennzeichnet, dass** in den Übergang ein Durchbruch (20) eingelassen ist.

14. Planetenträger (10) nach einem der vorherigen Ansprüche,
**dadurch gekennzeichnet, dass** der Planetensteg (11a, 11 b) zumindest eine in einer Umfangswandung (23a, 23b) eingelassene Durchbrechung (24) aufweist.

15. Planetenträger (10) nach einem der vorherigen Ansprüche,
**dadurch gekennzeichnet, dass** der Planetenträger (10) Teil eines Strömungskraftanlagengetriebes, insbesondere eines Meeresströmungskraftanlagengetriebes oder eines Windkraftanlagengetriebes ist.

16. Windkraftanlage nach einem der vorherigen Ansprüche.
